Europäisches Patentamt

European Patent Office

Office européen des brevets

(11) Veröffentlichungsnummer: **0 186 724**
**B1**

# (12) EUROPÄISCHE PATENTSCHRIFT

(45) Veröffentlichungstag der Patentschrift: **12.12.90**

(51) Int. Cl.⁵: **G 06 F 11/26**

(21) Anmeldenummer: **85100083.6**

(22) Anmeldetag: **04.01.85**

(54) Prüf- und Diagnoseeinrichtung für Digitalrechner.

(43) Veröffentlichungstag der Anmeldung:
**09.07.86 Patentblatt 86/28**

(45) Bekanntmachung des Hinweises auf die
Patenterteilung:
**12.12.90 Patentblatt 90/50**

(84) Benannte Vertragsstaaten:
**DE FR GB**

(56) Entgegenhaltungen:
**EP-A-0 030 007**
**EP-A-0 104 635**
**EP-A-0 108 255**
**EP-A-0 108 256**
**EP-A-0 135 009**
**WO-A-81/01208**
**WO-A-81/01210**

**INTERNATIONAL TEST CONFERENCE 1984,**
**paper 10-6, October 1984, Seite 338-347; Butt et**
**al.:"Impact of mixed-mode self-test on life cycle**
**cost of VLSI based designs"**

(73) Patentinhaber: **IBM DEUTSCHLAND GMBH**
**Pascalstrasse 100**
**D-7000 Stuttgart 80 (DE)**
(84) **DE**

(73) Patentinhaber: **International Business Machines**
**Corporation**
**Old Orchard Road**
**Armonk, N.Y. 10504 (US)**
(84) **FR GB**

(72) Erfinder: **Blum, Arnold, Dipl.-Ing.**
**Finkenweg 16**
**D-7261 Gechingen (DE)**

(74) Vertreter: **Jost, Ottokarl, Dipl.-Ing.**
**Schönaicher Strasse 220**
**D-7030 Böblingen (DE)**

(56) References cited:
**IEEE DESIGN & TEST OF COMPUTERS, Band 1,**
**Nr. 4, November 1984, Seite 45-52; J.J.**
**LeBlanc:"LOCST: A built-in self-test technique**

EP 0 186 724 B1

**Beschreibung**

Die Erfindung betrifft eine Einrichtung zur Fehlerprüfung und -diagnose eines Prozessors nach dem Oberbegriff des Anspruchs 1 sowie Verfahren zu ihrem Betrieb.

Das Testen von hochintegrierten Logik- und Speicherschaltkreisen auf Chips, aus denen elektronische Steuerungen, Prozessoren und andere Datenverarbeitungseinrichtungen aufgebaut sind, beruht sehr wesentlich auf der Zugänglichkeit der Speicherelemente auf diesen Chips. Gerade hier aber ergeben sich Probleme, weil die digitalen Systeme einer sehr hohen Fehlerabdeckung bedürfen und die Prüfung der hochintegrierten Schaltkreisstrukturen, wegen der Schaltkreisdichte dieser VLSI-Chips (VLSI=Very Large Scale Integration), einen hohen Zeit- und Kostenaufwand erfordert. Datenverarbeitungseinrichtungen, wie beispielsweise Mikroprozessoren, bestehen aus oder enthalten sehr komplizierte Chips, die in einer Weise geprüft werden müssen, welche die hohe Anzahl von Zuständen berücksichtigt, die die bistabilen Speicherelemente einnehmen können und die auch die sogar noch größere Anzahl von Zustandsfolgen mit einbeziehen, welche die genannten Speicherelemente eines Prozessors während der Ausführung von Programmroutinen durchlaufen haben.

Betrachtet man eine Mikroinstruktion als eine endliche funktionale Größe, dann ist die Überprüfung der im allgemeinen wohl spezifizierten und definierten Funktion einer Mikroinstruktion, wie beispielsweise die Einstellung von bistabilen Schaltern, welche die Zustände einer arithmetischen und logischen Einheit (ALU) nach der Ausführung einer Additions-Mikroinstruktion kennzeichnen, ein überschaubares Problem. Schwierigkeiten treten jedoch dann auf, wenn alle möglichen Nebenfunktionen dieser Additions-Mikroinstruktion getestet werden sollen, wie beispielsweise die Veränderung oder Nichtveränderung des Zustandes bistabiler Schalter, z.B. eines solchen, der Busanforderungen während der Ausführung einer solchen Additions-Mikroinstruktion indiziert.

Im allgemeinen benötigen die Nebenfunktionen eine große Anzahl von bistabilen Schaltern oder Speicherelementen, die dem Datenfluß und der Steuerlogik des Mikroprozessors zugeordnet sind. Diese Speicherelemente können im allgemeinen nicht direkt für Testzwecke erreicht werden, selbst durch besondere Mikroinstruktion nicht, ohne dabei die momentan herrschende Zustandssituation der bistabilen Schalter oder Speicherelemente, die der Zustandsanzeige dienen, zu verändern.

Hochintegrierte Logikstrukturen und Systemarchitekturen, die prüfbar sein sollen, machen oft von sog. LSSD-Entwurfsregeln (LSSD=Level Sensitive Scan Design) Gebrauch, nach denen beispielsweise ein Logik-Subsystem nur signalpegelabhängig ist, wenn—und nur dann—die Antwort im eingeschwungenen Zustand auf eine Eingangssignaländerung von Schaltkreis- und Leitungsverzögerungen innerhalb des Logik-Subsystems unabhängig ist (vgl. "A Logic Design Structure for LSI Testability" von E. B. Eichelberger—Proceedings of the Design Automation Conference, No. 14, 20—22. Juni 1977, New Orleans, Louisiana, Seiten 462—468).

Basierend auf diesen LSSD-Entwurfsregeln wird die Beobachtbarkeit und Einstellbarkeit der Gesamtheit aller Speicherelemente auf einem Chip dadurch ermöglicht, daß die einen Bestandteil der Logik bildenden und auch zwischen den Logikstufen angeordneten Master-Slave-Flipflops im Testbetrieb zu einer oder mehreren Schieberegisterketten zusammenschaltbar sind, über die Prüfmuster in die Tiefe der Logik hineingeschoben und Ergebnismuster herausgeschoben werden.

Über diese Schieberegisterketten ist es auch möglich, vollständige Flipflop- oder Registerstatusinformation komplexer und hinsichtlich ihrer Packung abgegrenzter Logikstufen, wie beispielsweise ein Chip oder ein Modul, hinein- und/oder herauszuschieben.

Diese Schieberegisterlösung hat ferner den Vorteil, daß nur relativ wenig Ein-/Ausgangsanschlüsse erforderlich sind und eine hochgradige Flexibilität zwischen allen Packungsstufen erreicht werden kann, wenn alle ersten Packungsstufen-Schieberegisterketten mit einer gemeinsamen zweiten Packungsstufen-schieberegisterkette und so fort verbunden wird, ohne daß dabei der logische Entwurf innerhalb der Chips beeinflußt wird.

Da die Speicherelemente eines Prozessors fast ausschließlich als Schieberegisterstufen ausgebildet sind, kann die Überprüfung der Nebenfunktionen entweder von einem integrierten Wartungs- und Bedienungsprozessor oder von einem anschließbaren separaten Tester vorgenommen werden, indem der Inhalt der bistabilen Speicherelemente, die für die Prüfung zu Schieberegistern zusammengeschaltet werden, vor und nach der Ausführung der zu überprüfenden Mikroinstruktion in den Wartungs- und Bedienungsprozessor oder den Tester geschoben werden, der den Unterschied der Zustände mit vorgegebenen Sollwerten vergleicht.

Eine weitere wesentliche Verbesserung der diagnostischen Fähigkeit von Mikrobefehlsprüfungen im Daten- und Befehlsaustausch der Verarbeitungseinheiten und Prozessoren untereinander ist dadurch denkbar, daß die Testprozeduren auf noch engere funktionelle Größen angewendet werden, wie beispielsweise die Taktschritte der zu prüfenden Mikroinstruktion. Dadurch könnte die Fehlerprüfabdeckung automatischer Tests erheblich verbessert werden.

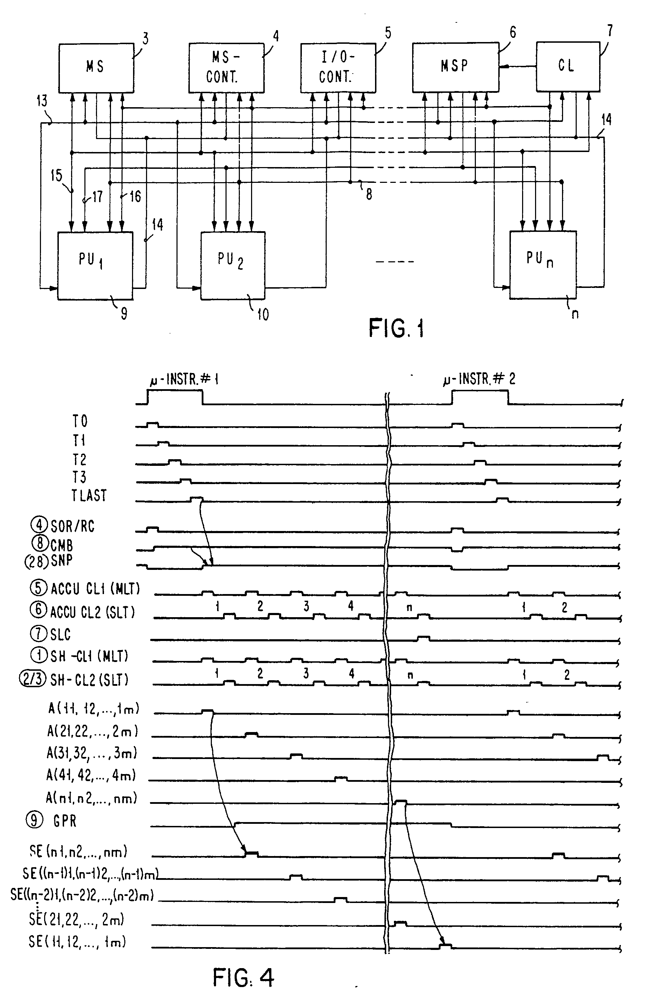

Die vorstehend erwähnten Prüfverfahren haben jedoch den Nachteil, daß sie einen Hochgeschwindigkeitstransport von Zuständen erfordern, die in einer sehr großen Zahl von bistabilen Schaltelementen gespeichert sind, der von dem Wartungs- und Bedienungsprozessor oder einem Fabriktester durchgeführt werden müßte, den diese aber aufgrund der bekannten langsamen Prüfnetze und des seriellen Verschiebemechanismus nicht ausführen können. Darüber hinaus kann auch die Taktgeschwindigkeit der Verschiebeeinrichtung trotz der sehr schnellen Technologie der Prozessorchips nicht weiter gesteigert werden, da ein solcher bekannter Verschiebering zwei langsamere Netze aufweist, von denen sich das eine von dem Prozessor oder der Verarbeitungseinheit zum Wartungs- und Bedienungsprozessor und das andere sich vom Wartungs- und Bedienungsprozessor zum Prozessor erstreckt (vgl. Fig. 1, Leitungen 14 und 13).

Datenverarbeitungssysteme sind jedoch im allgemeinen mit parallelen Hochgeschwindigkeits-Systembussen ausgestattet, welche die verschiedenen Einheiten, wie beispielsweise die Prozessoren 9, 10,...n, den Hauptspeicher 3, die Hauptspeichersteuerung 4, die Ein-/Ausgabegerätesteuerung 5 und ggf. den Wartungs- und Bedienungsprozessor 6, wie Fig. 1 zeigt, miteinander verbinden. Diese Systembusse sind jedoch bei bekannten Datenverarbeitungsanlagen normalerweise für den direkten Zugriff des Wartungs- und Bedienungsprozessors zu den bistabilen Elementen der Prozessoren, welche u.a. auch die Statusinformation enthalten, nicht vorgesehen. Eine Ausnahme bildet hierbei eine Prüf- und Diagnoseeinrichtung für Digitalrechner, die in der europäischen Patentanmeldung 83 105 172.7 (EP—A—126 785) beschrieben ist. Bei dieser Datenverarbeitungsanlage sind die Speicherelemente (Flipflops), die im normalen Betrieb die Logik-Subnetze miteinander verbinden, für den Fehlerprüf- und Diagnosebetrieb zu einer adressierbaren Matrix zusammengeschaltet, so daß der vorgesehene Wartungs- und Bedienungsprozessor sowohl Adresseninformation zur Ansteuerung der einzelnen Speicherelemente der Matrix als auch Testdaten über den schnellen Systembus zum Einspeichern in die Speicherelemente der Matrix sowie Teststeuer- und Taktinformation zu der zu prüfenden Einheit übertragen kann. Ferner werden nach erfolgter Prüfung der Logik-Subnetze deren Ergebnisdaten in die jeweils angeschlossenen Speicherelemente eingegeben und von dort dem Wartungs- und Bedienungsprozessor aus den wieder zu einer Matrix zusammengeschalteten Speicherelementen mittels über den Systembus übertragener Adresseninformation und Steuerinformation ebenfalls über den Systembus übernommen.

Da es sich bei den Speicherelementen der Matrix ausschließlich um solche Stufen handelt, die aus sog. Master-Flipflops aufgebaut sind, ist die übliche Realisierung mit Schieberegistern, die aus Master-Slave-Flipflops aufgebaut sind, nicht möglich, was für viele Entwurfskonzepte von Datenverarbeitungsanlagen sehr nachteilig ist.

Für Datenverarbeitungsanlagen, deren Speicherelemente aus Master/Slave-Flipflops aufgebaut sind, ist für den schnellen Austausch von Testdaten über den Systembus in der europäischen Patentanmeldung 83 112 339.3 (EP—A—146 645) eine Lösung beschrieben, bei der auch die Schnittstellenregisterstufen, die sich zwischen dem Systembus 8 und den Prozessoren 9 bis n (vgl. Fig.

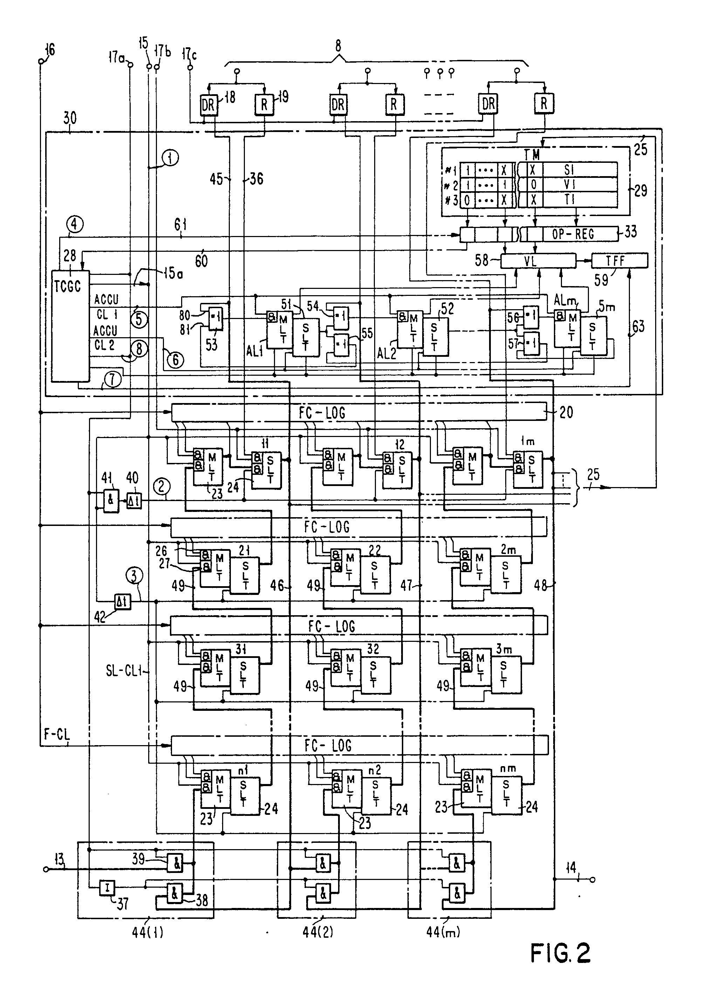

1) befinden, in die Schieberegisterkette einbezogen sind, die ihrerseits eine girlandenförmige Anordnung hat und deren Anfang und Ende im Testbetrieb durch einen steuerbaren Schalter 44 (vgl. Fig. 2) zusammengeschaltet sind.

Im Testbetrieb sind die Übernahme von Testdaten und die Abgabe von Ergebnisdaten, die jeweils über den Systembus erfolgen, mit den internen Verschiebeschritten der girlandenförmigen Schieberegisterkette überlappt.

Ein anderer Nachteil bekannter Systeme resultiert aus der Einadrigkeit des Prüfbusses 13, 14, welche die Gefahr in sich birgt, daß Leitungsunterbrechungen zum Totalausfall des Prüfbusses und damit auch der Datenverarbeitungsanlage führen, weil im allgemeinen der Wartungs- und Bedienungsprozessor neben der Prüffunktion auch die Bedienungsfunktion des Systems erfüllt, indem er beispielsweise die Konsole des Systems mit Bildschirm und Tastatur steuert.

Ernstzunehmende Probleme ergeben sich für elektronische Datenverarbeitungsanlagen vor allem aus intermittierenden Fehlern, besonders, wenn sie von dem Umfeld der Anlage abhängen. Gestörte Stromversorgungsnetze, elektrostatisch ungünstig gestaltete Fußbodenbeläge sowie Hochfrequenzstörungen von in der Nähe der Datenverarbeitungsanlage installierten Hochfrequenzgeneratoren von Labor- oder Fabrikationsgeräten sind sehr häufig die Ursache solcher intermittierenden Fehler. In solchen Fällen versagen Mikroinstruktions-Testprogramme als Instrument zur systematischen Feststellung der Fehler und ihrer Ursachen.

Die Erfindung hat es sich somit zur Aufgabe gemacht, eine Prüfeinrichtung anzugeben, die in elektronischen Datenverarbeitungsanlagen schnell und zuverlässig, auch gegenüber intermittierenden Fehlern, die Aufgabe der Fehlerprüfung wahrnimmt und dabei einen relativ einfachen Aufbau aufweist.

Gelöst wird diese Aufgabe der Erfindung durch die im Hauptanspruch angegebenen Merkmale.

Vorteilhafte Weiterbildungen und Ausgestaltungen des Gegenstandes der Erfindung sowie Verfahren zu dessen Betrieb sind den übrigen Ansprüchen zu entnehmen.

Durch die Erfindung wird somit der Vorteil erzielt, daß die Fehlerprüfung bei elektronischen Datenverarbeitungsanlagen, deren Schaltkreise nach den Prinzipien der Höchstintegrationstechnik aufgebaut sind, äußerst ökonomisch, schnell und allumfassend durchführbar ist.

EP—A—108 255 und IEEE Design & Test of Computers, Bond 1, Nr 4, November 1984, Seite 45—52 (Artikel von LEBLANC:" LOCST: A built-in self test technique) zeigen Einrichtungen nach dem Oberbegriff von Anspruch 1. EP—A—108 256 und International Test Conference, 1984, Paper 10—6, oktober 1984, Seite 338—347 (Artikel von BUTT et al.: "Impact of mixed-mode self-test on life cycle cost of VLSI based designs") zeigen daß ein Signaturprüfakkumulator auch zur Erzeugung von zufalls behofteten Prüfdaten verwendet werden kann.

Im folgenden wird ein Ausführungsbeispiel der Erfindung anhand der Figuren erläutert.

Es ziegen:

Fig. 1 das Blockschaltbild einer modular aufgebauten elektronischen Datenverarbeitungsanlage,

Fig. 2 das Blockschaltbild einer Verarbeitungseinheit, einschießlich der Schaltungsanordnungen, die für eine Fehlerprüf- und Diagnoseeinrichtung vorgesehen sind,

Fig. 3 das Blockschaltbild einer Verarbeitungseinheit, einschließlich modifizierter Schaltungsanordnungen, die für die Fehlerprüf- und Diagnoseeinrichtung nach Fig. 2 vorgesehen sind und

Fig. 4 ein Zeitdiagramm zur Veranschaulichtung der Fehlerprüf- und Daignoseoperationen in den Schaltungsanordnungen nach den Fign. 2 und 3.

Fig. 1 zeigt das Blockschaltbild einer modular aufgebauten Datenverarbeitungsanlage, die über Ein-Chip-Verarbeitungseinheiten oder -prozessoren (PU1-PUn) 9 bis n verfügt, die über einen Systembus 8 sowohl miteinander als auch mit einem Hauptspeicher (MS) 3, einer Hauptspeicher-Steuereinheit (MS-CONT) 4, einer Ein-/Ausgabegerätesteuerung (I/O-CONT) 5 und einem Wartungs- und Bedienungsprozessor (MSP) 6 verbunden sind. Es existieren ferner Verbindungen 13 bis 17 zwischen den oben aufgeführten Systemkomponenten einerseits und dem Wartungs- und Bedienungsprozessor 6 andererseits, über die Steuer- und Taktsignale sowie Test- oder Prüfdaten übertragen werden. Unter den genannten Leitungen befindet sich ferner eine Taktleitung 15, die eine Verbindung der Systemkomponenten zu einem Wartungs- und Bedienungsprozessor 6 herstellt, der, wie Fig. 1 zeigt, ebenfalls mit dem Takterzeuger (CL) 7 verbunden ist. Anstelle eines zentralen Takterzeugers, wie der Takterzeuger 7, können die Systemkomponenten, insbesondere die Prozessoren 9 bis n, auch über individuelle Takterzeuger auf ihren jeweiligen Chips verfügen.

Wie nun in den Ein-Chip-Prozessoren 9 bis n weitgehend eigenständige Fehlerprüfungen, ohne größere Mitwirkungen des Wartungs- und Bedienungsprozessor 6 durchgeführt werden können, zeigen die in Fig. 2 dargestellten Schaltkreise. Die dargestellten Schaltkreise und die zugehörigen Erläuterungen beziehen sich auf den Prozessor 9. Die übrigen Prozessoren der Anlage verfügen, was die Fehlerprüfung betrifft, über einen analogen Aufbau. Der Systembus 8 möge im vorliegenden Ausführungsbeispiel eine Breite von 4 Bytes aufweisen. An diese Breite sind sowohl die Bus-Senderschaltungen (DR) 18 als auch die Bus-Empfängerschaltungen (R) 19 angepaßt.

Die Speicherelemente 23, 24, meistens sog. Polarity-Hold-Flipflops, sind gemäß den bereits erwähnten LSSD-Entwurfsregeln als Master-Slave-Flipflops ausgelegt, die im Prüf- oder Testbetrieb zu Schieberegisterketten zusammengefaßt werden.

Fig. 2 zeigt links unten an der Position n1 die Eingangsstufe einer Schieberegisterkette, die über einen Schalter 44(1), bestehend aus einem Inverter 37 und zwei UND-Toren 38 und 39, über die Leitung 13 des Prüfbusses mit dem Wartungs- und Bedienungsprozessor 6 verbunden ist.

Die Kette setzt sich dann mit Schieberegisterstufen in der Reihenfolge der Positionen (n-1)1, (n-2)1,..., 31, 21, 11, n2, 32, 22, 12,..., nm, 3m, 2m and 1m fort, wobei der Ausgang der Kette und des Slave-Flipflops (SLT) an der Position 1m über die abgehende Leitung 14 des Prüfbusses mit dem Wartungs- und Bedienungsprozessor 6 und der Eingang der Kette über den linken Schalter 44(1) und den Master-Flipflop (MLT) der Eingangsstufe n1 mit der ankommenden Leitung des Prüfbusses 13 verbunden sind. Auf diese Weise ergibt sich eine Verbindung zwischen dem Wartungs- und Bedienungsprozessor 6 und der zu prüfenden Verarbeitungseinheit, beispielsweise dem Prozessor 9.

Die bereits erwähnten Schalter 44(1) bis 44(m) haben die Aufgabe, den Ausgang jeweils der ihr zugeordneten, spaltenweise angeordneten Teilschieberegisterkette, beispielsweise an den Positionen n1, 31, 21, 11 oder n2, 32, 22, 12 oder nm, 3m, 2m, 1m mit ihrem jeweiligen Eingang zu verbinden, so daß die in den Schieberegisterstufen gespeicherten Informationsinhalte in der Schieberegisterkette oder den Teilketten selbst schrittweise von Stufe zu Stufe zirkulieren können.

Bei bekannten Datenverarbeitungsanlagen werden die Testdaten oder Prüfmuster seriell über die Leitung 13 vom Wartungs- un Bedienungsprozessor 6 in die Schieberegisterkette hineingeschoben, und zwar mit Hilfe eines Schiebetaktes, der über eine Test- Schiebetaktleitng 15 vom Wartungs- und Bedienungsprozessor 6 an die zu prüfende Verarbeitungseinheit angelegt wird. Dieser Schiebetakt, der in den Figuren mit SH-CL1 bezeichnet ist und der dem zeitlich zuerst zugeführten Takt einer Schieberegisterstufe entspricht sowie die Übernahme der Daten in den Master-Flipflop 23 steuert, wird auf dem Chip in einem Verzögerungsglied 42 um die Zeitspanne $\Delta t$ verzögert. Dieser verzögerte Takt, der mit SH-CL2 bezeichnet ist, entspricht dem zweiten Schiebetakt einer Schieberregisterstufe, der die Datenübernahme des Slave-Flipflops (SLT) 24 aus dem vorhergehenden Master-Flipflop steuert.

Die Tastdaten werden normalerweise über die Leitung 13 oder den Systembus 8 in die Schieberegisterkette hineingeschoben. Nach erfolgter Übernahme der Testdaten in den einzelnen Schieberegisterstufen werden diese Testdaten den zu prüfenden Logik-Subnetzen (FC LOG) 20 zugeführt. Diese Logik-Subnetze 20 sind im allgemeinen aus Logikstufen der verschiedensten Art, z.B. NAND-, NOR-Invertern, Exklusiv-ODER-Schaltungen und dergleichen aufgebaut. Die Verarbeitung der Testdaten in den Logik-Subnetzen 20 wird durch Funktionstaktsignale F-CL gesteuert, die entweder von dem zentralen Taktgeber 7 über die Leitung 16 zu dem Prozessor 9 übertragen oder aber alternativ von einem (nicht dargestellten) prozessoreigenen Taktgeber erzeugt werden.

Die Antwort der Logik-Subnetze 20 auf die Testdaten, also deren Ergebnisdaten, werden danach von den Schieberegisterstufen übernommen und bei bekannten Datenverarbeitungsanlagen (vgl. europäische Patentanmeldung 83 112 339.3) mit den Schiebetakten SH-CL1 und SH-CL2 über die Leigung 14 oder den Systembus 8 in den Wartungs- und Bedienungsprozessor 6 zwecks Fehleranalyse und/oder Diagnose hineingeschoben.

Die Erfindung hingegen beschreitet einen anderen Weg. Anstelle der Übertragung der Flipflop-Inhalte vor und nach der Ausführung einer Mikroinstruktion zu dem Wartungs- und Bedienungsprozessor 6 zwecks Vergleich mit vorgegebenen korrekten Werten, werden in den Prüfeinrichtungen der Verarbeitungseinheiten 9 bis n oder im Wartungs- und Bedienungsprozessor 6 Signatur-Erzeugerschaltungen 30 vorgesehen, die zwischen den Sende- und Empfangsschaltungen 18 und 19 des Systembusses 8 und dem Schnittstellenregister, gebildet aus den Master-Slave-Flipflops an den Positionen 11, 12,..., 1m, angeordnet sind und die für jede Mikroinstruktion eine signifikante Bitkonfiguration erzeugen, die auf dem Chip selbst mit einer korrekten, für die Mikroinstruktion signifikanten Bitkonfiguration verglichen wird.

Zur Durchführung dieser Prüfaufgaben ist in der Signatur-Erzeugerschaltung 30 ein eigener Prüfprogrammspeicher (TM) 29, der über den Systembus 8, das zuvor erwähnte Schnittstellenregister 11, 12, ..., 1m und eine (mehradrige) Leitung 25 geladen wird, ferner ein Prüftaktgenerator und -zähler (TCGC) 28, ein Operationsregister (OP-REG) 33, eine Vergleichsschaltung 58 sowie ein Prüfmusterakkumulator, der aus den Flipflops 51 bis 5m an Positionen AL1 bis ALm sowie den Exklusiv-ODER-Schaltungen 53 bis 57 aufgebaut ist, vorgesehen. Wie Fig. 2 weiter zeigt, werden sowohl der Prüfmusterakkumulator als auch die Vergleichsschaltung 58 von dem Prüftaktgenerator und -zähler 28, die sich wie die übrigen Komponenten auf dem Prozessorchip 9 befinden, gesteuert. Der Prüftaktgenerator und -zähler 28 liefert auch die entsprechenden Verschiebetakte für die Schieberegisterketten bzw. -teilketten des Prozessors. Die Operationsschritte der Signatur-Erzeugerschaltung 30 sind, wie insbesondere das Zeitdaigramm in Fig. 4 erkennen läßt, mit der Ausführung der zu prüfenden Instruktion synchronisiert, und zwar durch ein Instruktionstoppbit, das in der ersten Bitposition der Prüfmikroinstruktion im Prüfprogrammspeicher 29 mitgeführt und über das Operationsregister 33 und die Leitung 60 zum Prüftaktgenerator und -zähler 28 gelangt.

Bevor jedoch die zu prüfende Instruktion ausgeführt wird, wird der Inhalt aller bistabilen Speicherelemente des Prozessors, die Teil seines Datenflusses und seiner Steuerlogik sind, durch eine vollständige Rundumverschiebung in den genannten Schieberegisterketten in die Signatur-Erzeugerschaltung 30 gebracht, und es wird ein signifikanter Anfangswert erzeugt. Die Zusammenschaltung der bistabilen Speicherelemente zu einer girlandenförmigen Kette und die Weitergabe der Prüfmuster und der taktweise Transport der Prüf- und Ergebnisdaten ist ausführlich in der europäischen Patentanmeldung 83 112 339.3 beschrieben. In der dort vorgeschlagenen Weise kann der Zustand aller bistabilen Speicherelemente des Prozessors 9 von der Signatur-Erzeugerschaltung 30 in einer wesentlich verkürzten Zeit beobachtet bzw. verarbeitet werden, als es der Fall wäre, wenn die Zustände erste in einen Tester übertragen werden müßten, wodurch sich auch der Zeitaufwand für die Fehlerprüfung und -diagnose erheblich reduziert.

Da in vielen Fällen während der Prüfoperation die Zustände der bistabilen Speicherelemente wieder in den vorhergehenden Zustand eingestellt werden müssen, nachdem sie von der Signatur-Erzeugerschaltung 30 beobachtet wurden, können auch andere parallele Verschiebepfade verwendet werden, beispielsweise solche, wie sie in Fig. 2 dargestellt sind, wo die übrigen Schalter 44, neben dem bereits im Zusammenhang mit der Eingangsstufe n1 erwähnten Schalter 44, die girlandenförmige Schieberegisterkette, beispielsweise in parallele, unabhängige Teilschieberegisterketten aufgliedern, in denen die Verschiebungen der Prüf- und Resultatmuster parallel erfolgen. Prinzipiell sind auch, je nach Einstellung der Schalter 44, andere Konfigurationen von Schieberegistern möglich. Auch diese Aufteilungen führen zu einer beträchtlichen Verringerung der Prüfzeit. Außerdem kann zu einer weiteren Beschleunigung des Fehlerprüfverfahrens die Erzeugung der Verschiebetakte auf dem gleichen Chip beitragen, da hierdurch die Verschiebung mit einer höheren Frequenz durchgeführt werden kann.

Nach einer vollständigen Rundumverschiebung der Inhalte aller bistabilen Speicherelemente und der Akkumulation dieser Werte (beispielsweise auch der verschiedenen Stati) wird die zu prüfende Instruktion dann in einem Einzelschritt (Einzelinstruktionsschritt) oder in einem einzelnen Instruktionszyklusschritt ausgeführt, und es wird erneut eine vollständige Rundumverschiebung der Inhalte der bistabilen Speicherelemente vorgenommen. Nach Beendigung der Rundumverschiebung enthält der Prüfmusterakkumulator eine Angabe des Zustandes aller bistabilen Speicherelemente nach der Ausführung oder Teilausführung, die für die zuvor erwähnte Instruktion signifikant ist.

Die Zustände der bistabilen Speicherelemente sind also das Ergebnis von Stimuli (zugeführten Prüfmustern), die der Prozessorlogik zum Zeitpunkt der Statusinitiierung und von Ausführungsvorgängen, die während der Ausführung der zu prüfenden Instruktion vorgelegt werden.

Am Ende des Prüfvorgangs befindet sich in der Signatur-Erzeugerschaltung 30 ein Prüfresultat, das ebenfalls die Statusanteile von Nebenfunktionen der Prozessorschaltkreise beinhaltet, die vormals im Verlaufe von üblichen funktionellen Mikroinstruktions-Testprüfprogrammläufen vernachlässigt wurden. Die Signaturinformation, also die akkumulierten Zustände der bistabilen Speicherelemente während der Ausführung oder Teilausführung einer Instruktion, z.B. #2, wird nun in üblicher Weise mit erwarteten, vorher errechneten Sollwerten verglichen, die beispielsweise aus dem Prüfprogrammspeicher 29 gleichzeitig mit dem Operationscode der zu prüfenden Instruktion ausgelesen werden. Auch dieser Prüfprogrammspeicher 29 kann sich, wie die gesamte übrige Schaltkreisstruktur, auf dem gleichen Prozessorchip befinden.

Diese Sollwerte können beispielsweise mit den Instruktionsadressen korreliert werden, sie müssen jedoch nicht für jede Instruktion im Prüfprogrammspeicher 29 gespeichert werden, da auch ein Adressenübersetzungsmechanismus verwendet werden kann, wenn die Zustände der bistabilen Speicherelemente Datenabhängigkeiten nicht aufweisen. Die Sollwerte werden dann automatisch unt mit hoher Geschwindigkeit zur Verfügung gestellt. Der Vergleich muß nicht in der Signatur-Erzeugerschaltung 30 vorgenommen werden, er kann auch in einen angeschlossenen Wartungs- und Bedienungsrechner oder einen Fabriktester, der in den parallelen Systembus 8 anschließbar ist, verlagert werden.

Die Arbeitsweise der Signatur-Erzeugerschaltungen 30 läßt sich am besten im Zusammenhang mit dem Steuerimpulsdiagramm in Fig. 4 erläutern. In der obersten Zeile dieses Diagramms ist ein Ausschnitt einer Mikroinstruktionsfolge, so wie sie aus dem Prüfprogrammspeicher 29 ausgelesen wird, mit den μ-Instruktionen #1 und #2 dargestellt. Es handelt sich bei den genannten Mikroinstruktionen um solche der Zykluslänge 5, d.h. daß sie von 5 Zykluszeitimpulsen T0, T1, T2, T3 und TL (L dient der Kennzeichnung des letzten Zykluszeitimpulses) gesteuert werden. Diese sind in Fig. 4 in den folgenden fünf Zeilen (2 bis 6) dargestellt.

Der Prüftaktgenerator und -zähler 28 liefert zu Beginn ein Signal ④ (Zeile 7), durch welches zunächst der interne Zähler zurückgestellt (RC) und das Operationsregister 33 über die Leitung 61 gesetzt wird (SOR). Hierdurch wird die Setzinstruktion #1 aus dem Prüfprogrammspeicher 29 in das Operationsregister 33 übertragen und somit in den Akkumulierungsprozeß einbeozogen. Von dem Operationsregister 33 aus werden dann die entsprechenden Steueraktionen eingeleitet. Die Mikroinstruktion #1 im Prüfprogrammspeicher 29 ist eine Setzinstruktion (SI), die in ihrer ersten Bitstelle ein auf 1 gesetztes Stopp-Bit mit sich führt. Dieses gelangt über die Leitung 60 zu Prüftaktgenerator und -zähler 28, der im Verlaufe des ersten Instruktionszyklus T0 ein Prüfbetriebsart-Bit ⑧ CMB (Zeile 8) aufsetzt, das bis zum Beginn der nächsten Mikroinstruktion #2, einer zu prüfenden Instruktion (Vi), gesetzt bleibt.

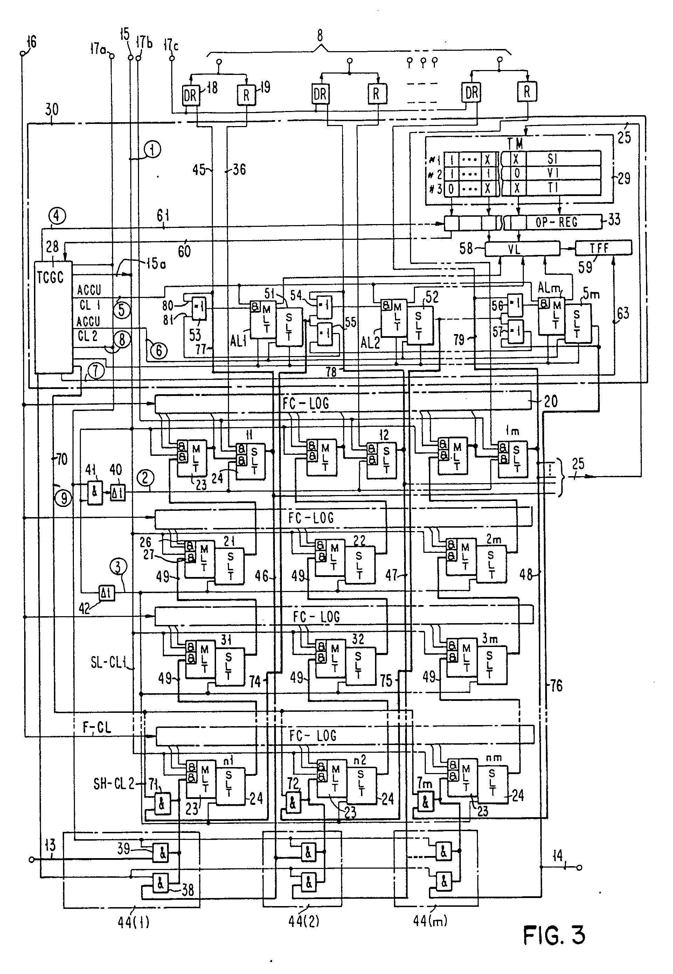

Im letzten Instruktionszyklus TL wird im Prüftaktgenerator und -zähler 28 ein Signal SNP (Zeile 9) erzeugt, das bis zum Beginn der nächsten Mikroinstruktion gesetzt bleibt, die normale Instruktionsverarbeitung stoppt und die hierzu erforderliche Steuerung kontrolliert; z.B. wird gleichzeitig mit dem Signal SNP vom Prüftaktgenerator und -zähler 28 der Akkumulatortakt ACCU CL1 gestartet, dem dann nach einer bestimmten Verzögerungszeit der Akkumulatortakt ACCU CL2 folgt. Dadurch wird der Akkumulator für die Aufnahme von Daten aus den bistabilen Speicherelementen des Prozessors vorbereitet. Die Akkumulatortakte ACCU CL1 und ACCU CL2 sind in Fig. 3, Zeilen 10 und 11 mit den Nummern ⑤ und ⑥ bezeichnet.

Über die Steuerleitung 15a wird dann etwa mit dem Akkumulatortakt ACCU CL2 synchron und phasengleich der Verschiebetakt SH-CL1 vom Prüftaktgenerator und -zähler 28 oder über die Leitung 15 angeschlossenen Wartungs- und Bedienungsprozessor oder einem Fabriktester übertragen (vgl. Signal ① (Zeile 13)). Mittels eines Verzögerungsgliedes (Δt) 42 wird der in Fig. 3 unter ③ (Zeile 14) dargestellte zweite Verschiebetakt SH-CL2 erzeugt, allerdings nur für die bestabilen Schaltelemente an den Positionen 21 bis nm. Für die bistabilen Schaltelemente an den Positionen 11 bis 1m wird der zweite Verschiebetakt, dargestellt unter ② (ebenfalls Zeile 14 in Fig. 4), von einem mittels eines UND-Tores 41 geschalteten Verzögerungsgliedes (Δt) 40 erzeugt. Das Steuersignal für das UND-Tor wird über die Leitung 17a vom Wartungs- und Bedienungsprozessor her übertragen. Der andere der beiden Eingänge des UND-Tores 41 ist mit der Leitung 15 verbunden, über die, wie bereits erwähnt wurde, der Verschiebetakt SH-CL1 übertragen wird.

Aus den Zeilen 15 bis 19 in Fig. 4 wird deutlich, wie mit den Schiebeimpulspaaren SH-CL1/2 die Inhalte der Stufen 11, 12, ..., 1m; 21, 22, ..., 2m; 31, 32, ..., 3m; 41, 42, ..., 4m; ...; n1, n2, ..., nm in jeweils die Akkumulatorsstufen 51, 52, ..., 5m gelangen. Die Zeitpunkte, zu denen die Werte A (i, j) jeweils zur Verfügung stehen, zeigen eben die genannten Zeilen 15 bis 19 in Fig. 4.

Am Ende von n übertragenen Verschiebeimpulspaaren SH-CL1/2 sind die Zustände bzw. Inhalte aller in den Schieberegister-Teilketten angeordneten bistabilen Speicherelemente des Prozessorchips 9 in die Signatur-Erzeugerschaltung 30 übertragen worden und stehen dort als akkumulierter Wert in den bistabilen Schaltelementen 50 bis 52 zum Vergleich mit einem vorher errechneten Sollwert zur Verfügung. Die Akkumulierung der Werte besorgte das Schiebetaktpaar ACCU CL1/2 des Prüfmusterakkumulators.

Wie die Struktur des Prüfmusterakkumulators in Fig. 2 zeigt, werden die in den Slave-Flipflops der bistabilen Schaltelemente 50 bis 52 jeweils gespeicherten Bits mit den jeweils aus den bistabilen Schaltelementen des Prozessorchips eingehenden Bits gemäß einer Exklusiv-ODER-Funktion miteinander verknüpft. Im Prinzip lassen sich auch andere logische Verknüpfungen, beispielsweise gemäß einer UND-Funktion zur Akkumulierung der Bits verwenden.

Nachdem der letzte Impuls n des Akkumulatortaktes ACCU CL2 verstrichen ist, wird in der Vergleichslogik (VL) 58 der Vergleich der Signatur, die im Prüfmusterakkumulator nun gespeichert ist, mit dem vorbestimmten Sollwert verglichen und im Falle einer Nichtübereinstimmung ein Prüf-Flipflop (TFF) 59 gesetzt. Dieser Vorgang wird zeitlich durch ein Signal SCL gesteuert, das vom Prüftaktgenerator und -zähler 28 erzeugt und über eine Leitung 63 zu dem Prüf-Flipflop 59 übertragen wird. Sein zeitliches Auftreten ist in Fig. 4 im Signalzug ⑦ (Zeile 12) dargestellt.

Durch die in den Fign. 2 und 4 dargestellte Fehlerprüfung, die auch die Nebenfunktionen voll erfaßt, läßt sich eine beträchtlich höhere Fehlerabdeckung erreichen, als dieses mit funktionellen Mikroinstruktions-Prüfprogrammen möglich ist. Hierdurch wird die Überlegenheit der funktionellen Prüfung, die nicht nur statische, sondern auch dynamische Fehler aller Art, einschließlich technologie- und entwurfrelevanter Fehler abdeckt, weiter verbessert. Die verbesserte Fehlerabdeckung ergibt sich im wesentlichen aus der schaltkreisgesteuerten diagnostischen Vergleichsfunktion der Zustände der prozessorinternen bistabilen Speicherelemente nach der Ausführung oder Teilausführung einer Instruktion. Diese Prüfungen können auch auf eine nicht unterbrochene Ausführung von Ketten von (Mikro-) Instruktionen als auch Maschineninstruktionen angewendet werden. Der beschriebene Mechanismus ist ferner nicht nur auf manuell erzeugte deterministische Prüfprogramme beschränkt, sodern es können auch als Stimuli pseudozufallsgenerierte Prüfprogramme (Pseudozufallsoperationscode und Datenmanipulation) verwendet werden.

Die beschriebenen Fehlerprüfungen können auch an Anwendungsprogrammen durchgeführt werden, in denen intermittierende Fehler auftreten. Der Unterschied zu den speziellen Mikroinstruktions-Prüfprogrammen besteht darin, daß letztere nur Statusdaten erzeugen, die vom Mikroinstruktions-Prüfprogrammgenerator bekannt sind, wohingegen die Anwendungsprogramme Statusinformation erzeugen, die im voraus nicht bekannt ist und die im wesentlichen von den Daten des Anwenders abhängen. Die für den Vergleich mit den akkumulierten Prüfdaten notwendigen Solldaten müssen dabei allerdings empirisch mittels einer völlig intakten Maschine ermittelt werden. Die Anwendungsprogramme müssen jedoch in der normalen Betriebsart ausgeführt werden, um nicht die Umgebung der auftretenden Fehler zu verändern.

Durch wiederholte Läufe des zu prüfenden Anwendungsprogramms mit jeweils der gleichen Datensituation werden die Statusmusterfolgen des Prozessors für jeden Programmlauf identisch sein, da in fest allen Fällen die Anwendungsprozesse synchron und daher deterministisch sind, was insbesondere für die Schaltkreise des Prozessordatenflusses zutrifft.

Zur Realisierung eines solchen Prüfmechanismus wird anstelle jeder Mikroinstruktion oder jeder Teilmikroinstruktion jeder Maschineninstruktion des Anwendungsprogramms vorübergehend ein Sollwertfeld zugeordnet. Die Durchführung des Vergleichs der Soll- mit den Istwerten der Ergebnisdaten muß nicht ummittelbar für jede Instruktion durchgeführt werden, sondern er kann auch nach Durchlauf einer ganzen Kette von Instruktionen (eines Teilprogramms) vorgenommen werden. Hieraus ergibt sich der Vorteil, daß der für die Speicherung der Sollwerte erforderliche Speicherbedarf gering gehalten werden kann. Auch der Speicher für die Sollwerte ist vorzugsweise auf demselben Chip untergebracht, wie die Signatur-Erzeugerschaltung 30 und der zugehörige Datenverarbeitungskomplex.

Da die Sollwerte nun abhängig von den Benutzerdaten sind, können sie vom Hersteller der Datenverarbeitungsanlage nicht vorherbestimmt werden. Wegen der intermittierenden Natur von Hardwarefehlern gibt es Durchläufe des Benutzerprogramms, die fehlerfrei sind und solche, die Fehler aufweisen. Während eines fehlerfreien Durchlaufs werden die benutzerdatenabhängigen Sollwerte automatisch von der Signatur-Erzeugerschaltung 30 für die Befehle des Anwendungsprogramms generiert und automatisch in den zugeordneten Sollwertfeldern gespeichert.

Ein intermittierend fehlerhaftes Programm kann erneut mit den gleichen Anfangsdaten in einem Prüfbetrieb gestartet werden, anstelle des Sollwerterzeugerbetriebs, und dieses viele Male, bis der Fehler auftritt. Die hierzu erforderlichen Prozenduren können automatisch von einem angeschlossenen Wartungs- und Bedienungsprozessor, der auch in der Lage ist, diagnostische Funktionen durchzuführen, ausgeführt werden. Eine solche Testeinrichtung ist von besonderem Wert, da für die Stimulation der Prozessorschaltkreise nicht nur künstlich erzeugte Prüfmuster, sondern reale Muster des Anwendungsprogramms auf der Basis der benutzerabhängigen Daten verwendet werden. Die künstlich erzeugten Prüfmuster, wie Pseudozufallsmuster oder Muster für die Prüfung von Haftfehlern bzw. Ständigfehlern (stuck-at-fault), haben bekanntlich mehrere Nachteile: sie sind in einem besonderen Fehlerzenarium nicht verfügbar, oder sie sind nicht erschöpfend, oder sie bestehen aus einer so großen Menge, daß die Wahrscheinlichkeit einer Koinzidenz mit dem intermittierenden Hardwarefehler sehr niedrig ist.

Die in Fig. 3 dargestellte Schaltungsanordnung dient, zunächst wie die in Fig. 2 dargestellte Prüfeinrichtung, der Akkumulierung der Zustände von internen Speicherelementen eines Prozessors nach Ausführung einer Mikroinstruktion oder eines einzelnen Subzyklus einer Mikroinstruktion (z.B. Exklusiv-ODER-Akkumulierung).

Damit wird das Test- bzw. Prüfeingangsmuster mit Hilfe dieser vorangehend ausgeführten Mikroinstruktion bzw. eines Subzyklus einer solchen Mikroinstruktion erzeugt. Nach der Ausführung der nächsten Mikroinstruktion entsteht in den einzelnen Speicherelementen das Ergebnismuster, das als Eingangstest- bzw. Prüfmuster für die Ausführung der übernächsten Mikroinstruktion dient und das nach Ausführung der zweiten Mikroinstruktion dann akkumuliert wird. Damit nach der Akkumulierung in den internen Speicherelementen des Prozessors das richtige Eingangstest- bzw. Prüfmuster vor der Ausführung der dritten Mikroinstruktion erhalten bleibt, werden während des Akkumulierungsprozesses die Schalter 44(i) aktiviert, so daß eine Rundumverschiebung der Statusinformation der internen Speicherelemente erfolgt. Damit bleit deren ursprüngliche Information erhalten.

Zur Verbesserung der Prüfmuster durch Kombination von instruktionsgenerierten Prüfmustern und zufallsgenerierten Prüfmustern wird die in Fig. 2 dargestellte Schaltungsanordnung in der in Fig. 3 prinzipiell dargestellten Form erweitert. In der erweiterten Schaltungsanordnung sind zusätzliche zweite Schalter 71, 72 und 7m sowie Verbindungsleitungen 70, 74, 75, 76, 77, 78 und 79 vorgesehen, die bewirken, daß bei der Rundumverschiebung nicht die Inhalte der Speicherelemente aus dem oberen Ende (Specherelemente 11, 12, ..., 1m) der aus den internen Speicherelementen gebildeten Schieberinge, sondern die jeweils akkumulierten Zwischenwerte aus dem Akkumulator zurückgeführt werden.

Diese Rückführung erfolgt aus dem Slave-Latch (SLT) 51, über die Leitung 74 und den Schalter 71 in den Master-Latch (MLT) an der Matrixposition n1. Weitere Rückführungen erfolgen aus dem Slave-Latch (SLT) 52, über die Leitung 75 und den Schalter 72 in den Master-Latch an der Position n2 und so fort, bis schließlich die letzte Rückführung aus dem Slave-Latch (SLT) 5m, über die Leitung 76 und den Schalter 7m in den Master-Latch (MLT) an der Position nm erfolgt. Die Steuerung der Schalter wird vom Prüftaktgenerator- und -zähler 28 über die Leitung 70 mittels des Signals ⑨ GRP vorgenommen.

Durch die Rundumverschiebung mit den Zwischenwerten des Prüfmusterakkumulators entsteht in den internen Speicherelementen ein neues Prüfmuster, das sich von dem nach der Ausführung der zweiten Mikroinstruktion unterscheidet. Nach dem Anlegen der funktionalen Takte F-CL ergibt sich auch ein neues Ergebnismuster, das ebenfalls den Akkumulierungsprozeß durchläuft, so daß danach wiederum nach einer Rundumverschiebung in den Teilschiebeketten mit den jeweiligen Zwischenwerten des Prüfakkumulators ein neues Prüfmuster entsteht.

Durch die Kombination der beiden Rundumverschiebungen in den Teilschiebeketten erhält man auf zeitsparende Weise eine große Vielfalt von Prüfmustern, die zu einer hohen Fehlerabdeckung, auch bei der Ausführung von Mikroinstruktions-Prüfprogrammen, führt, wobei durch die jeweilige zwischenzeitliche Ausführung einer Mikroinstruktion die Zufallsnatur der durch die nach Fig. 3 modifizierten Prüfeinrichtung erzeugten Prüfmuster determiniert ist.

Der zeitliche Ablauf der Erzeugung der zufallsbehafteten Prüfmuster ist in Fig. 4, Zeilen 20 bis 25 dargestellt. Eingestellt wird dieser besondere Prüfmodus durch ein Signal ⑨ GRP, das von dem Prüftaktgenerator und -zähler 28 über die Leitung 70 an die Schalter 71 bis 7m angelegt wird und das diese so einstellt, daß die akkumulierten Daten aus dem Slave-Latch SLT der entsprechenden Stufe in den Master-Latch MLT der ersten Stufe der zugeordneten Teilschiebekette gelangt. Somit wird bei vorhandenem Signal ⑨, d.h. bei durchgeschalteten Schaltern 71 bis 7m mit dem nächstfolgenden Impuls des Verschiebetaktes SH-CL1 der erste akkumulierte Wert aus den Slave-Latch-Stufen des Prüfakkumulators in die unterste Schieberegisterstufe aller Schieberegisterteilketten, das sind die Stufen n1, n2, ..., nm, eingegeben. Mit weiteren Schiebeimpulspaaren SH-CL1/2 werden schließlich alle Stufen der Teilschieberegisterketten mit zufallsgenerierten Prüfdaten beaufschlagt. Es sei an dieser Stelle noch einmal daran erinnert, daß das Anlegen von Prüfsignalen mit der Erzeugung der Ergebnisdaten verschachtelt abläuft.

## Patentansprüche

1. Einrichtung zur Fehlerprüfung und -diagnose eines Prozessors (z.B. 9), dessen Logik-Subnetze (20) durch Speicherelemente (23, 24) verbunden sind, die im Fehlerprüf- und -diagnosebetrieb zur schiebetaktgesteuerten Zuführung von Prüfdaten und zur Abnahme von Ergebnisdaten schieberegisterartig zusammengeschaltet und mit einer Signatur-Erzeugerschaltung (30), enthaltend einen Prüfakkumulator (51, 52, ..., 5m) zur Akkumulierung der Prüf- und Ergebnisdaten aus den Speicherelementen (23, 24), einen Prüftaktgenerator und -zähler (28) zur Steuerung der Akkmulation, und eine Einrichtung (58) zum Vergleich der Ergebnis-Ist-Daten mit Ergebnis-Soll-Daten, verbunden sind, welche Vergleichseinrichtung (58) bei Nichtübereinstimmung einen Fehlerindikator (59) einstellt, dadurch gekennzeichnet, daß zur Prüfung, auch von Operationsnebenfunktionen, ein Prüfspeicher (29) vorgesehen ist, welcher Prüfprogramme, bestehend aus Prüfdaten und/ oder den Instruktionen, und Daten gemäß einem Benutzerprogramm des Prozessors und den jeweils zugehörigen Ergebnis-Soll-Daten liefert und an ein Schnittstellenregister (11, 12, ..., 1m) bzw. einen Systembus (8) des Prozessors (9) und an die Signatur-Erzeugerschaltung angeschaltet ist, wobei die Stufen des Schnittstellenregisters in die Schieberegisteranordnung, einbezogen sind und einerseits au den Prüfspeicher angeschlossen sind, sodaß dieser über das Schnittstellenregister geladen wird und andererseits mit den zugeordneten Stufen des Prüfakkumulators verbunden sind sodaß die Signatur erzeugt wird, daß zur Erzeugung von zufallsbehafteten Daten die Ausgänge (74, 75, 76) des Prüfakkumulators über Schalten (71, 72, 7m) au die Schieberegisteranordnung zugeführt sind, so daß, wenn die den jeweiligen Akkumulatorstufen (AL1 bis ALm) zugeordneten Schalter (71 bis 7m) geschlossen sind, bei einer Rundumverschiebung mit Hilfe der Schiebetaktpaare (SH-CL1) die jeweils akkumulierten Zwischenwerte aus den Akkumulatorstufen (Al1 bis ALm) parallel über die Schalter den Speicherelementen (23, 24) zugeführt werden.

2. Einrichtung zur Fehlerprüfung und -diagnose nach Anspruch 1, dadurch gekennzeichnet, daß die Schieberegisteranordnung, je nach Einstellung weiterer Schalter (44(1) bis 44(m)) entweder in parallele Teilketten (11, 21, 31, ..., n1; 12, 22, 32, ..., n2; ...; 1m, 2m, 3m, ..., nm) oder in girlandenartige Teilketten (n1, ..., 31, 21, 11, n2, ..., 32, 22, 12) oder in teils girlandenförmige, teils parallele Teilketten aufgegliedert ist.

3. Einrichtung zur Fehlerprüfung nach einem oder mehreren der Ansprüche 1 bis 2, dadurch gekennzeichnet, daß für die Generierung von Prüfdaten aus fehlerfrei ablaufenden Anwendungsprogrammen die Organisation des Prüfspeichers (29) so getroffen ist, daß jeder Maschineninstruktion des Anwendungsprogramms vorübergehend ein Soll-Wert-Feld zugeordnet ist, in welches die Ergebnis-Soll-Daten für fehlerfreie Instruktionsausführung eingespeichert und aus dem für einen späteren Vergleich die Ergebnis-Soll-Daten wieder ausgelesen werden.

4. Einrichtung zur Fehlerprüfung und -diagnose nach einem oder mehreren der Ansprüche 1 bis 3, dadurch gekennzeichnet, daß die Signatur-Erzeugerschaltung (30) in einem Wartungs- und Bedienungsprozessor (6) angeordnet ist und über den Systembus (8) mit dem Schnittstellenregister des Prozessors (z.B. 9) verbunden ist, wobei besondere Steuerleitungen (15 bis 17c, 70) für die Übertragung von Funktions- und Schiebetaktsignalen sowie Signalen für die Einstellung der ersten Schalter (44(1) bis 44(m)) und zweiten Schalter (71 bis 71m) vorgesehen sind.

5. Einrichtung zur Fehlerprüfung und -diagnose nach einem oder mehreren der Patentansprüche 1 bis 4, dadurch gekennzeichnet, daß die Signatur-Erzeugerschaltung (30) für die Bedienung mehrerer Prozessoren (9, 10, ..., n) vorgesehen ist.

6. Einrichtung zur Fehlerprüfung und -diagnose nach einem oder mehreren der Ansprüche 1 bis 5, dadurch gekennzeichnet, daß der Akkumulator aus Schieberegisterstufen (51, 52, ..., 5m) aufgebaut ist, die über Exklusiv-ODER-Schaltungen (53, bis 57) derart miteinander verbunden sind, daß deren Eingänge (z.B. 80, 81) mit jeweils einem bestimmten Teil der Schieberegisteranordnung (z.B. 11) bzw. mit dem Ausgang (z.B. 55) der eigenen (51) bzw. einer vorhergehenden Schieberegisterstufe verbunden sind, wobei die Schieberegisterstufen (51, 52, ..., 5m) aus Master/Slave-Flipflops bestehen, von denen die Masterstufen vom ersten Akkumulatortakt (ACCU CL1) und die Slavestufen mit dem zweiten Akkumulatortakt (ACCU CL2) getaktet werden.

7. Verfahren zum Betrieb der Fehlerprüf- und -diagnoseeinrichtung nach einem oder mehreren der Ansprüche 1 bis 6, dadurch gekennzeichnet, daß im Prüfbetrieb mit der ersten aus dem Prüfspeicher (29) in ein Operationsregister (33) abgerufenen Instruktion (SI), die eine Setzinstruktion ist, die Signatur-Erzeugerschaltung (30) sowie die zu einer Schieberegisteranordnung zusammengeschalteten Speicherelemente (23, 24) in eine definierte Anfangsstellung eingestellt werden, daß danach die zu prüfende Instruktion (VI) aus dem Prüfspeicher in das Operationsregister eingelesen wird, daß dann die Prozessorlogik (20) die zu prüfende Instruktion, die eine Länge von einem bis mehreren Subzyklen (Zykluszeiten Ti) aufweisen kann, ausführt, daß dann in an sich bekannter Weise die von der Prozessorlogik erzeugten Ergebnisdaten in die Speicherelemente eingespeichert werden, daß danach die zu einer Schieberegisteranordnung zusammengeschalteten Speicherelemente einen Verschiebeschritt durchführen, so daß die Ergebnisdaten schrittweise in die Signatur-Erzeugerschaltung (30) gelangen, in der sie akkumuliert werden, daß ferner nach beendeter Ausführung der zu prüfenden Instruktion die zur zu prüfenden Instruktion (VI) gehörende Prüfinstruktion (TI) vom Prüfspeicher (29) in das Operationsregister (33) ausgelesen wird, woraufhin die in der Prüfinstruktion mitgeführten oder berechneten Ergebnis-Soll-Daten zu der Vergleichsschaltung (58) übertragen werden, die die akkumulierten Ergebnis-Ist-Daten mit den Ergebnis-Soll-Daten in bekannter Weise vergleicht und einen Fehlerindikator einstellt, daß zur Durchführung von Prüfungen mit zufallsbehafteten Prüfdaten aufgrund der Stellung der zweiten Schalter (71, 72, ..., 7m) bei der Verschiebeoperation jeweils die akkumulierten Zwischenwerte aus den Akkumulatorstufen parallel über die Schalter in die Schieberegisteranordnung zurückgeführt werden, so daß der Prozessorlogik (20) akkumulierte und somit zufallsbehaftete Prüfdaten zugeführt werden.

8. Verfahren nach Anspruch 7, dadurch gekennzeichnet, daß bei der Ausführung der zu prüfenden Instruktion je Befehlszyklus (Ti) die Ergebnisdaten der Prozessorlogik (20) in die zu einer Schieberegisteranordnung zusammengeschalteten Speicherelemente (23, 24) gebracht, daß danach ein Verschiebezyklus und ein Akkumulierungszyklus durchgeführt und am Ende der Verarbeitung der Vergleich der Ergebnis-Ist-Daten mit den Ergebnis-Soll-Daten durchgeführt wird.

9. Verfahren zum Betrieb einer Einrichtung nach einem oder mehreren der Ansprüche 3 bis 6, dadurch gekennzeichnet, daß für die Generierung von Prüfdaten aus fehlerfrei ablaufenden Anwendungsprogrammen auf der Basis von Maschineninstruktionsroutinen bei dem Durchlauf des Kundenprogramms mit Hilfe der Signatur-Erzeugerschaltung (30) im Akkumulator (51, 52, ..., 5m) Ergebnis-Soll-Daten gebildet werden, die über das Schnittstellenregister (11, 12, ..., 1m) und eine Leitung (25) in Ergebnis-Soll-Datenfelder im Prüfspeicher (29) übertragen werden, von wo sie bei einem erneuten, gegebenenfalls fehlerbehafteten Durchlauf des Kundenprogramms für den Vergleich mit den entsprechenden Ergebnis-Ist-Daten bereitgestellt werden.

10. Verfahren nach Anspruch 9, dadurch gekennzeichnet, daß die Erzeugung der Ergebnis-Soll-Daten aus fehlerfrei ablaufenden Kundenprogrammen auf der Basis von Maschineninstruktionen erfolgt.

11. Verfahren nach Anspruch 10, dadurch gekennzeichnet, daß die Erzeugung von Ergebnis-Soll-Daten auf der Basis von Mikroinstruktionen bzw. deren Subzyklen erfolgt.

## Revendications

1. Dispositif pour le contrôle et le diagnostic des défectuosités d'un processeur (par exemple, 9), dont les sous-réseaux logiques (20) sont reliés par des éléments de mémoire (23, 24), qui, au cours du fonctionnement de contrôle de défectuosités et de diagnostic sont interconnectés à la façon d'un registre à décalage pour l'amenée commandée au rythme du décalage de données de contrôle et pour le prélèvement de données de résultats et sont reliés à un montage générateur de signature (30), comprenant un accumulateur de contrôle (51, 52, ..., 5m) pour accumuler les données de contrôle et de résultat provenant des éléments de mémoire (23, 24), un générateur et compteur de rythme de contrôle (28) pour la commande de l'accumulation et un dispositif (58) pour comparer les données de résultat réelles aux données de résultat prescrites, lequel dispositif de comparaison (58) règle un indicateur d'erreurs ou défectuosités (59) en cas de non-coïncidence caractérisé en ce que, pour contrôler même des fonctions opérationnelles secondaires, on prévoit une mémoire de contrôle (29) qui fournit des programmes de contrôle, comprenant des données de contrôle et/ou les instructions, et des données selon un programme utilisateur du processeur et les données de résultat prescrites correspondantes dans chaque cas, et est raccordée à un registre d'interface (11, 12, ..., 1m) ou un bus système (8) du processeur (9) et au montage générateur de signature, les étages du registre d'interface étant incorporés dans l'ensemble de registre à décalage et étant reliés d'une part à la mémoire de contrôle, de sorte que celle-ci se charge par l'intermédiaire du registre d'interface et, d'autre part, aux étages correspondants de l'accumulateur de contrôle, de sorte que la signature est engendrée, en ce que, pour engendrer des données aléatoires, les sorties (74, 75, 76) de l'accumulateur de contrôle rejoignent, par l'intermédiaire d'interrupteurs (71, 72, 7m), à l'ensemble de registre à décalage, de sorte que, lorsque les interrupteurs correspondants aux étages d'accumulateur respectifs (AL1 à ALm) sont fermés, lors d'un décalage panoramique à l'aide des paires de rythme de décalage (SH-CL1) les valeurs intermédiaires respectivement accumulées sont transmises des étages d'accumulateur (AL1 à ALm) aux éléments de mémoire (23, 24) en parallèle par l'intermédiaire des interrupteurs.

2. Dispositif de contrôle et de diagnostic selon la revendication 1, caractérisé en ce que l'ensemble de registre à décalage, est, selon le positionnement d'autres interrupteurs (44(1) à 44(m)) subdivisé ou bien en chaînes partielles parallèles (11, 21, 31, ..., n1; 12, 22, 32, ..., n2; ...; 1m, 2m, 3m, ..., nm) ou en chaînes partielles à boucles (n1, ..., 31, 21, 11, n2, ..., 32, 22, 12) ou en chaînes partielles en partie bouclées et en parties parallèles.

3. Dispositif de contrôle selon l'une ou chacune des revendications 1 et 2, caractérisé en ce que, pour la génération de données de contrôle à partir de programmes d'application se déroulant sans erreurs, la mémoire de contrôle (29) est organisée de telle façon qu'à chaque instruction machine du programme d'application est rattachée transitoirement une zone de valeurs de consigne dans laquelle les données de résultat prescrites pour l'exécution sans erreur de l'instruction sont mémorisées et de laquelle les données de résultat prescrites sont réextraites pour une comparaison ultérieure.

4. Dispositif de contrôle et de diagnostic selon une ou plusieurs des revendications 1 à 3, caractérisé en ce que le montage générateur de signature (30) est placé dans un processeur d'entretien et de service (6) et est relié par l'intermédiaire du bus système (8) au registre d'interface du processeur (par exemple, 9), des conducteurs de commande particuliers (15 à 17c, 70) pour la transmission de signaux de fonction et de rythme de décalage, ainsi que de signaux pour le positionnement des premiers interrupteurs (44(1) à 44(m)) et des seconds interrupteurs (71 à 71 m) étant prévus.

5. Dispositif de contrôle et de diagnostic selon une ou plusieurs des revendications 1 à 4, caractérisé en ce que le montage générateur de signature (30) est prévu pour faire fonctionner plusieurs processeurs (9, 10, ..., n).

6. Dispositif de contrôle et de diagnostic selon une plusieurs des revendications 1 à 5, caractérisé en ce que l'accumulateur est constitué par des étages de registre à décalage (51, 52, ..., 5m) qui sont reliés entre eux par l'intermédiaire de circuits OU exclusif (53 à 57) de telle façon que leurs entrées (par exemple 80, 81) sont reliées chaque fois à une partie déterminée de l'ensemble de registre à décalage (par exemple 11), ou à la sortie (par exemple 55) de l'étage de registre à décalage lui-même (51) ou d'un étage précédent, les étages de registre à décalage (51, 52, ..., 5m) étant constitués par des bascules maître/esclave dont les étages maître sont rythmés par le premier rythme d'accumulateur (ACCU CL1) et les étages esclave par le second rythme d'accumulateur (ACCU CL2).

7. Procédé pour faire fonctionner le dispositif de contrôle et de diagnostic selon une ou plusieurs des revendications 1 à 6, caractérisé en ce que au cours du fonctionnement de contrôle avec la première instruction (SI) appelée de la mémoire de contrôle (29) dans le registre d'opérations (33), qui est une instruction de positionnement, le montage générateur de signature (30) et les éléments de mémoire (23, 24) interconnectés en un ensemble de registre à décalage sont mis dans un état initial défini, en ce qu'ensuite l'instruction à contrôler (VI) est transférée de la mémoire de contrôle au registre d'opérations, en ce qu'alors la logique de processeur (20) exécute l'instruction à contrôler qui peut présenter une longueur d'un à plusieurs sous-cycles (durées de cycle Ti), en ce qu'alors, de façon connue en soi, les données de résultat engendrées par la logique de processeur sont mémorisées dans les éléments de mémoire, en ce qu'ensuite les éléments de mémoire interconnectés en un ensemble de registre à décalage effectuent un pas de décalage, de sorte que les données de résultat parviennent pas à pas dans le montage générateur de signature (30) où elles s'accumulent, en ce qu'en outre après l'achèvement de l'exécution de l'instruction à contrôler, l'instruction de contrôle (T1) appartenant à l'instruction à contrôler (VI) est transférée dans le registre d'opérations (33), sur quoi les données de résultat prescrites amenées en même temps dans l'instruction de contrôle ou calculées sont transmises au montage de comparaison (58) qui compare de façon connue les données de résultat réelles accumulées aux données de résultat prescrites et règle un indicateur d'erreurs, en ce que, pour effectuer des contrôles avec des données de contrôle aléatoires, sur la base de la position des seconds interrupteurs (71, 72, ..., 7m) lors de l'opération de décalage, les valeurs intermédiaires accumulées sont chaque fois ramenées des étages d'accumulateur dans l'ensemble de registre à décalage en parallèle par l'intermédiaire des interrupteurs, de sorte que des données de contrôle accumulées et, par suite, aléatoires, sont amenées à la logique de processeur (20).

8. Procédé selon la revendication 7, caractérisé en ce que, lors de l'exécution de l'instruction à contrôler par cycle de commande (Ti) les données de résultat de la logique de processeur (20) sont transférées dans les éléments de mémoire (23, 24) connectés en un ensemble de registre à décalage, et un cycle de décalage et un cycle d'accumulation sont effectués et à la fin du traitement la comparaison des données de résultat réelles avec les données de résultat prescrites est effectuée.

9. Procédé pour faire fonctionner un dispositif selon une ou plusieurs des revendications 3 à 6, caractérisé en ce que, pour la génération de données de contrôle à partir de programmes d'application se déroulant sans erreurs sur la base de sous-programmes d'instructions machine lors du passage du programme client à l'aide du montage générateur de signature (30) on forme dans l'accumulateur (51, 52, ..., 5m) des données de résultat prescrites qui sont transférées dans des zones de données de résultat prescrites de la mémoire de contrôle (29) par l'intermédiaire du registre d'interface (11, 12, ..., 1m) et d'un conducteur (25), zones d'où elles sont prélevées lors d'un nouveau déroulement du programme client, éventuellement erroné, pour la comparaison avec les données de résultat réelles correspondantes.

10. Procédé selon la revendication 9, caractérisé en ce que la génération des données de résultat prescrites à partir de programmes client se déroulant sans fautes a lieu sur la base d'instructions machine.

11. Procédé selon la revendication 10, caractérisé en ce que la génération de données de résultat prescrites à lieu sur la base de micro-instructions ou de leurs sous-cycles.

## Claims

1. Arrangement for error testing and diagnosing a processor (e.g. 9), whose logic subsystems (20) are interconnected by storage elements (23, 24) which in the error test and diagnostic mode for the shift clock controlled supply of test data and for accommodating result data are connected in the form of shift register means and which are linked to a signature generator circuit (30) comprising a test accumulator (51, 52, ..., 5m) for accumulating the test and result data from the storage elements (23, 24), a test clock generator and counter (28) for controlling the accumulation, and means (58) for comparing the actual result data with desired result data, said compare means (58) setting an error indicator (59) in response to a mismatch, characterized in that for testing, also of operational secondary functions, a test memory (29) is provided which supplies test programs, consisting of test data and/or instructions, and data according to a user program of the processor and the respective associated desired result data and which is connected to the signature generator circuit, the stages of the interface resistor being included in the shift register means and being connected to the test memory on the one hand, so that the latter is loaded by the interface register, and to the associated stages of the test accumulator on the other hand, so that the signature is generated, that for generating random test data, the outputs (74, 75, 76) of the test accumulator are connected to the shift register means through switches, so that when the switches (71 to 7m), associated with the respective accumulator stages (AL1 to ALm), are closed, the respective accumulated intermediate values from the accumulator stages (AL1 to ALm) are fed in parallel by the switches to the storage elements (23, 24) in response to a circular shift by means of the shift clock pairs (SH-CL1).

2. Arrangement for error testing and diagnosis according to claim 1, characterized in that the shift register means, depending upon the setting of further switches (44(1) to 44(m)), is subdivided into parallel partial chains (11, 21, 31, ..., n1; 12, 22, 32, ..., n2; ...; 1m, 2m, 3m, ..., nm) or garland-shaped partial chains (n1, ..., 31, 21, 11, n2, ..., 32, 22, 12) or partially garland-shaped, partially parallel partial chains.

3. Arrangement for error testing according to any one or several of the claims 1 to 2, characterized in that for generating test data from non-erroneous application programs, the test memory (29) is organized such that each machine instruction of the application program is temporarily associated with a desired value field in which the desired result data for non-erroneous instruction execution is stored and from which the desired result data is read for comparison at a later stage.

4. Arrangement for error testing and diagnosis according to any one or several of the claims 1 to 3, characterized in that the signature generator circuit (30) is arranged in a maintenance and service processor (6) and is connected to the interface register of the processor (e.g. 9) by the system bus (8), special control lines (15 to 17c, 70) being provided for the transmission of function and shift clock signals as well as signals for setting the first switches (44(1) to 44(m)) and the second switches (71 to 71m).

5. Arrangement for error testing and diagnosis according to any one or several of the patent claims 1 to 4, characterized in that the signature generator circuit (30) is provided for operating several processors (9, 10, ..., n).

6. Arrangement for error testing and diagnosis according to any one or several of the patent claims 1 to 5, characterized in that the accumulator is made up of shift register stages (51, 52, ..., 5m) interconnected by EXCLUSIVE-OR circuits (53 to 57) such that their inputs (e.g. 80, 81) are in each case connected to respectively a particular portion of the shift register means (e.g. 11), the output (e.g. 55) of the associated (51) and a preceding shift register stage, the shift register stages (51, 52, ..., 5m) being made up of master-slave flip-flops, the master stages of which are clocked by the first accumulator clock (ACCU CL1) and the slave stages of which are clocked by the second accumulator clock (ACCU CL2).

7. Method of operating the arrangement for error testing and diagnosis according to any one or several of the claims 1 to 6, characterized in that in the test mode, along with the first set instruction (SI) fetched from the test memory (29) to an operation register (33), the signature generator circuit (30) as well as the storage elements (23, 24) connected in the form of shift register means are set to a defined initial position that, subsequently, the instruction (VI) to be tested is read from the test memory into the operation register, that the processor logic (20) executes the instruction to be tested which may have a length of one or several subcycles (cycle times Ti), that the result data, generated by the processor logic in a known manner, is then stored in the storage elements, that the storage elements, connected in the form of a shift register means, perform a shift step so that the result data is fed in steps to the signature generator circuit (30) where it is accumulated, that furthermore after the instruction (VI) to be tested has been executed, the test instruction (TI) associated therewith is read from the test memory (29) into the operation register (33), causing the desired result data included in the test instruction or the computed desired result data to be transferred to the compare circuit (58) comparing the accumulated actual result data with the desired result data in a known manner and setting an error indicator, that for tests by means of random test data resulting from the setting of the second switches (71, 72, ..., 7m) during the shift operation, the accumulated intermediate values of the accumulator stages are fed back in parallel by the switches to the shift register means, so that accumulated and thus random test data is fed back to the processor logic (20).

8. Method according to claim 7, characterized in that upon execution of the instruction to be tested, the result data of the processor logic (20) is fed in each instruction cycle (Ti) to storage elements (23, 24) connected in the form of shift register means, and that subsequently, a shift cycle and an accumulation cycle are performed and the actual result data is compared with the desired result data at the end of processing.

9. Method of operating an arrangement according to any one or several of the claims 4 to 6, characterized in that for generating test data from non-erroneous application programs on the basis of machine instruction routines during the customer program run, desired result data is generated in accumulator (51, 52, ..., 5m) by means of the signature generator circuit (30), which is transferred by the interface register (11, 12, ..., 1m) and a line (25) to desired result data fields in the test memory (29) from where it is supplied during a renewed, possibly erroneous, run of the customer program for comparison with the relevant actual result data.

10. Method according to claim 9, characterized in that the desired result data is generated from non-erroneous customer programs on the basis of machine instructions.

11. Method according to claim 10, characterized in that the desired result data is generated on the basis of micro instructions and their subcycles, respectively.

EP 0 186 724 B1

FIG. 1

FIG. 4

FIG. 2

**EP 0 186 724 B1**

FIG. 3